# EUROPÄISCHE PATENTSCHRIFT

(11) **EP 3 524 393 B1**
(45) Veröffentlichungstag und Bekanntmachung des Hinweises auf die Patenterteilung: **04.11.2020**
(21) Anmeldenummer: 18206426.1
(22) Anmeldetag: 15.11.2018
(51) Int. Cl.: B25F 5/02, H01M 2/10

(54) **VORRICHTUNG ZUR VERRIEGELUNG EINES AKKUPACKS**
DEVICE FOR LOCKING A BATTERY PACK
DISPOSITIF DE VERROUILLAGE D'UN BLOC-BATTERIE

(30) Priorität: 12.12.2017 DE 102017129619
(43) Veröffentlichungstag der Anmeldung: 14.08.2019
(73) Patentinhaber: Metabowerke GmbH, 72622 Nürtingen (DE)
(72) Erfinder: Stoll, Michael, 73240 Wendlingen (DE)
(74) Vertreter: Schmid, Wolfgang

(56) Entgegenhaltungen:
- EP-A1- 2 875 910
- DE-A1-102005 050 781
- DE-A1-102006 050 816
- GB-A- 2 380 761
- US-A1- 2004 242 043

## Beschreibung

Die Erfindung betrifft eine Vorrichtung zur Verriegelung eines Akkupacks an einem Gehäuse eines Elektrohandwerkzeugs, mit einer Kontaktplatte zur Herstellung eines Kontakts zwischen dem Akkupack und dem Elektrohandwerkzeug und mit einer Verriegelungseinrichtung, die in wenigstens eine Ausnehmung in den Akkupack eingreift. Des Weiteren betrifft die Erfindung ein Elektrohandwerkzeug mit einem Gehäuse und einem Akkupack.

Derartige Vorrichtungen und entsprechende Elektrohandwerkzeuge sind aus dem allgemeinen Stand der Technik bekannt. Meist sind die Verriegelungseinrichtungen im Gehäuse gelagert, was deren Montage erheblich erschwert.

Aus der DE 10 2006 050 816 A1 ist eine gattungsgemäße Vorrichtung zur Verriegelung eines Akkupacks bekannt. Dabei ist ein Federelement in einem Gehäuse gelagert und wirkt auf ein als Hebel ausgebildetes, um eine Drehachse gelagertes Entriegelungselement, um den Akku entriegeln zu können.

Die DE 10 2005 050 781 A1 beschreibt eine Vorrichtung zur Verriegelung eines Ackupacks an einem Elektrowerkzeug, bei dem eine Verriegelungsvorrichtung an einem Fußende eines Griffteils des Elektrowerkzeugs gelagert ist. Die Verriegelungsvorrichtung weist einen drehbar an dem Fußende gelagerten Riegel auf, auf den ein Federelement wirkt, um eine Verriegelungsnase in eine Ausnehmung des Akkupacks zu drücken.

Die EP 2 875 910 A1 beschreibt eine weitere Vorrichtung zum Verriegeln eines Ackupacks an einem Elektrowerkzeug. Um die Verriegelung zu realisieren, greift ein von einer Spiralfeder mit Kraft beaufschlagter Zahn in eine Ausnehmung des Gehäuses des Akkupacks ein.

Die US 2004/0242043 A1 beschreibt eine weitere Vorrichtung zur Verriegelung eines Akkupacks, bei der zwei sich an einem Gehäuseteil abstützende Federelemente auf drehbar gelagerte Verriegelungshebel wirken.

Aus der GB 2 380 761 A ist eine weitere Vorrichtung zur Verriegelung eines Akkupacks bekannt.

Aus der DE 10 2014 217 992 A1 ist ein weiterer Akkupack für ein Elektrohandwerkzeuggerät bekannt, bei dem sich an dem Akkupack selbst Verriegelungselemente befinden.

Schließlich ist aus der WO 2016/083555 A1 eine weitere Verriegelungsvorrichtung für einen Akkupack an einem Elektrohandwerkzeug bekannt.

Es ist Aufgabe der vorliegenden Erfindung, eine Vorrichtung zur Verriegelung eines Akkupacks an einem Gehäuse eines Elektrohandwerkzeugs zu schaffen, die einfach zu montieren ist.

Erfindungsgemäß wird diese Aufgabe durch in Anspruch 1 genannten Merkmale gelöst.

Die erfindungsgemäße drehbare Lagerung der Verriegelungseinrichtung an der wenigstens einen Kontakt aufweisenden Kontaktplatte ermöglicht eine wesentlich einfachere Montage als bislang, da es bei der Montage des Elektrohandwerkzeugs nicht erforderlich ist, einzelne Bauteile zu montieren. Vielmehr kann die Kontaktplatte zusammen mit der Verriegelungseinrichtung insbesondere als vormontierte Einheit in das Gehäuse des Elektrohandwerkzeugs montiert werden.

In diesem Zusammenhang ist besonders vorteilhaft, dass sich die Verriegelungseinrichtung über das wenigstens eine Federelement an der Kontaktplatte abstützt, da auf diese Weise sämtliche für die Verriegelung des Akkupacks gegenüber dem Gehäuse eingesetzten Bauteile in der Kontaktplatte untergebracht sind und die Montage des Elektrohandwerkzeugs dadurch noch weiter vereinfacht wird.

Ein weiterer Vorteil der erfindungsgemäßen Lösung besteht in der Kompaktheit derselben, wodurch auf der Kontaktplatte ausreichend Bauraum vorhanden ist, um die gesamte Elektronik in das Gehäuse des Elektrohandwerkzeugs integrieren zu können. Dadurch können die Kontakte der Kontaktplatte direkt in die zum Betrieb des Elektrohandwerkzeugs eingesetzte Elektronik eintauchen und es sind keine elektrischen Leitungen zwischen den Kontakten des Akkupacks und einer ansonsten eingesetzten, separaten Elektronikeinheit notwendig.

In einer sehr vorteilhaften Weiterbildung der Erfindung kann vorgesehen sein, dass die Verriegelungseinrichtung eine Achse und zwei an beiden Enden der Achse angebrachte Verriegelungselemente aufweist. Dadurch ergibt sich eine sehr funktionale Ausführung der Verriegelungseinrichtung, die um die Achse drehbar gelagert werden kann und die aufgrund der beiden Verriegelungselemente eine sichere Verriegelung des Akkupacks an dem Gehäuse gewährleistet.

Wenn in einer weiteren vorteilhaften Ausgestaltung der Erfindung die Kontaktplatte eine längliche Ausnehmung aufweist, in der die Achse der Verriegelungseinrichtung drehbar gelagert ist, kann die Verriegelungseinrichtung sehr einfach in der Kontaktplatte aufgenommen und besonders einfach montiert werden. Des Weiteren ist auf diese Weise eine sichere Unterbringung der Verriegelungseinrichtung in der Kontaktplatte und eine einfache Ausgestaltung der drehbaren Lagerung derselben sichergestellt.

Eine sehr zuverlässige Funktionsweise der erfindungsgemäßen Vorrichtung ergibt sich, wenn sich die beiden Verriegelungselemente über jeweilige Federelemente an der Kontaktplatte abstützen.

Des Weiteren kann vorgesehen sein, dass die beiden Verriegelungselemente jeweils einen Stift aufweisen, der in das jeweilige Federelement eingreift. Auf diese Weise wird gewährleistet, dass die Verriegelungselemente in jedem Zustand der Verriegelungseinrichtung sicher mit den Federelementen, über die sie sich an der Kontaktplatte abstützen, verbunden sind.

Eine weitere vorteilhafte Ausgestaltung der Erfindung kann darin bestehen, dass die Achse aus einem Metallwerkstoff und die beiden Verriegelungselemente aus einem Kunststoffmaterial ausgebildet sind. Auf diese Weise wird die Dauerhaltbarkeit der Verriegelungseinrichtung erhöht und es ist außerdem eine einfache Herstellbarkeit derselben gegeben.

Um die Funktionalität eines mit der erfindungsgemäßen Vorrichtung ausgestatteten Elektrohandwerkzeugs zu erhöhen, kann des Weiteren vorgesehen sein, dass an der Kontaktplatte wenigstens ein Abstandshalter zur Erzeugung eines Abstands wenigstens eines der Verriegelungselemente von der Kontaktplatte angeordnet ist. Dadurch wird verhindert, dass beim Arbeiten mit einem mit einer erfindungsgemäßen Vorrichtung ausgestatteten Elektrohandwerkzeug anfallender Staub sich im Bereich zwischen der Verriegelungseinrichtung und der Kontaktplatte festsetzt, da dieser Staub durch den mittels des wenigstens einen Abstandshalters erzeugten Abstand nach unten fallen kann.

Eine einfache Integration des Akkupacks in das Gehäuse sowie eine einfache und sichere Montage desselben ergibt sich, wenn der Akkupack und/oder das Gehäuse Führungselemente zur Führung des Akkupacks in dem Gehäuse aufweist.

Wenn des Weiteren in dem Gehäuse ein auf die Verriegelungseinrichtung wirkendes Entriegelungselement verschieblich gelagert ist, so ist eine einfache Entriegelung der Verriegelungseinrichtung und damit ein einfachen Lösen des Akkupacks von dem Gehäuse möglich.

Ein Elektrohandwerkzeug mit einem Gehäuse, mit einem an dem Gehäuse anbringbaren Akkupack und mit einer erfindungsgemäßen Vorrichtung zur Verriegelung des Akkupacks an dem Gehäuse ist in Anspruch 10 angegeben.

Ein solches Elektrohandwerkzeug weist sämtliche oben genannten Vorteile, die sich durch die Verwendung der erfindungsgemäßen Vorrichtung ergeben, auf.

Nachfolgend ist ein Ausführungsbeispiel anhand der Zeichnung prinzipmäßig dargestellt.

Es zeigen schematisch:
- Figur 1: eine erste perspektivische Ansicht einer erfindungsgemäßen Vorrichtung in einem ersten Zustand;
- Figur 2: die Vorrichtung aus Fig. 1 in einem zweiten Zustand;
- Figur 3: eine andere Ansicht der erfindungsgemäßen Vorrichtung in dem Zustand von Fig. 2;
- Figur 4: eine perspektivische Ansicht der Kontaktplatte der erfindungsgemäßen Vorrichtung;
- Figur 5: eine perspektivische Ansicht der Verriegelungseinrichtung der erfindungsgemäßen Vorrichtung; und
- Figur 6: eine Seitenansicht der Kontaktplatte der erfindungsgemäßen Vorrichtung.

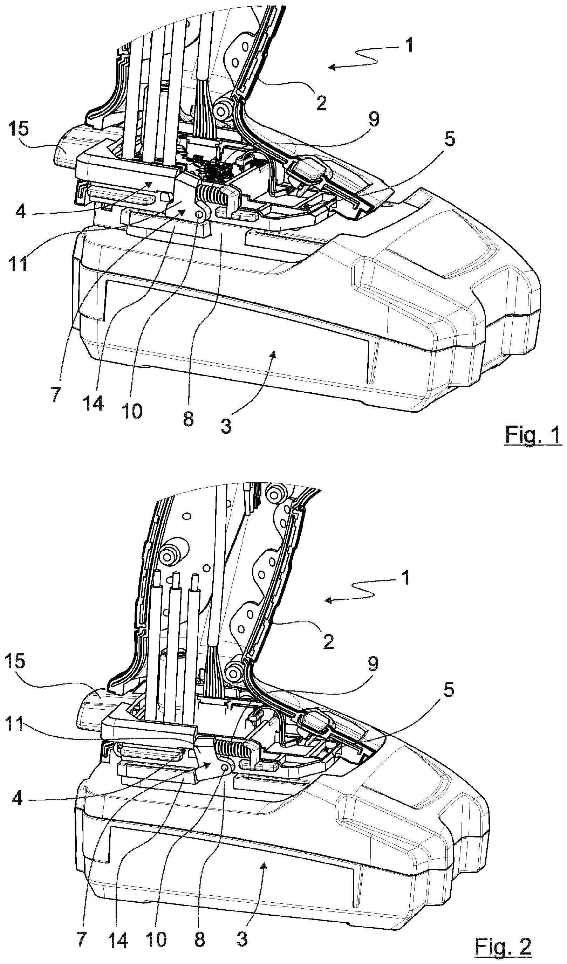

Figur 1 zeigt einen Teil eines Elektrohandwerkzeugs 1, nämlich ein Gehäuse 2 und einen an dem Gehäuse 2 angebrachten Akkupack 3. Der Akkupack 3 dient in an sich bekannter Weise zur Stromversorgung des Elektrohandwerkzeugs 1. Da der Aufbau und die Funktionsweise des Akkupacks 3 an sich bekannt sind, wird hierin nicht näher darauf eingegangen.

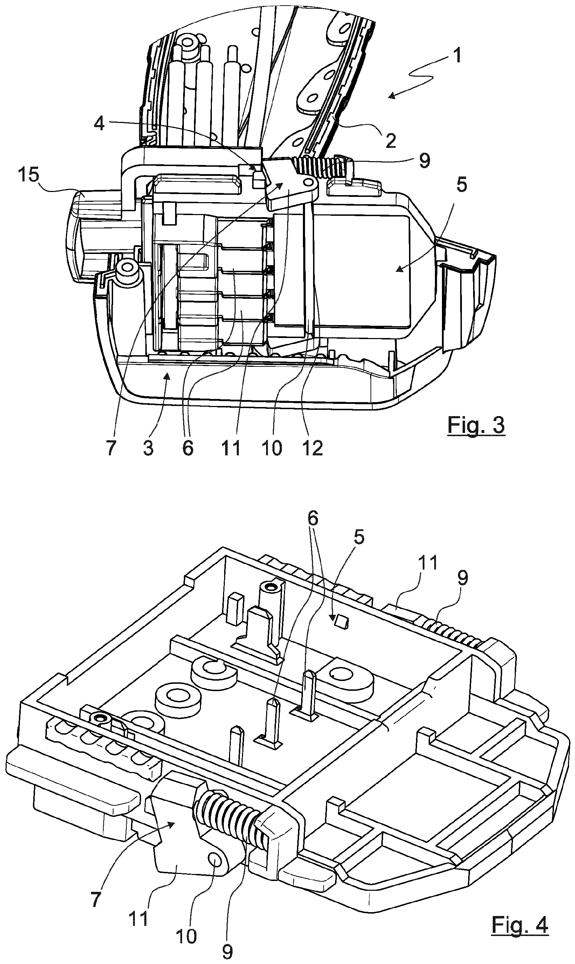

Zur Verriegelung des Akkupacks 3 gegenüber dem Gehäuse 2 dient eine nachfolgend beschriebene Vorrichtung 4. Die Vorrichtung 4 weist eine Kontaktplatte 5 auf, die grundsätzlich dazu dient, einen elektrischen Kontakt zwischen dem Akkupack 3 und dem Elektrohandwerkzeug 1 zu schaffen. Hierzu weist die Kontaktplatte 5 im allgemeinen wenigstens einen Kontakt 6, im vorliegenden Fall sowohl auf der Oberseite als auch auf der Unterseite jeweilige Kontakte 6 auf, die in den Figuren 3 und 4 zu erkennen sind. Da auch die Art und Weise der elektrischen Kontaktierung zwischen dem Akkupack 3 und dem Elektrohandwerkzeug 1 mittels der Kontaktplatte 5 und deren Kontakten 6 an sich bekannt ist, wird hierin ebenfalls nicht näher darauf eingegangen.

Die Vorrichtung 4 weist des Weiteren eine Verriegelungseinrichtung 7 auf, die dafür vorgesehen ist, in wenigstens eine Ausnehmung 8 in dem Akkupack 3 einzugreifen und damit eine Verriegelung des Akkupacks 3 an dem Gehäuse 2 herzustellen. In dem Zustand von Figur 1 befindet sich die Verriegelungseinrichtung 7 nicht in der Ausnehmung 8, d.h. der Akkupack 3 ist in diesem Zustand nicht mit dem Gehäuse 2 verriegelt, wohingegen in dem Zustand von Figur 2 die Verriegelungseinrichtung 7 in die Ausnehmung 8 eingreift und damit den Akkupack 3 an dem Gehäuse 2 verriegelt.

Die Verriegelungseinrichtung 7 ist drehbar an der Kontaktplatte 5 gelagert und stützt sich über wenigstens ein, im vorliegenden Fall über zwei Federelemente 9 an der Kontaktplatte 5 ab. Die Federelemente 9 sind dabei in einer Ausnehmung in der Kontaktplatte 5 aufgenommen. Während die Figuren 1, 2 und 3 jeweils nur eines der Federelemente 9 zeigen, sind in Figur 4 die beiden Federelemente 9 auf beiden Seiten der Kontaktplatte 5 dargestellt.

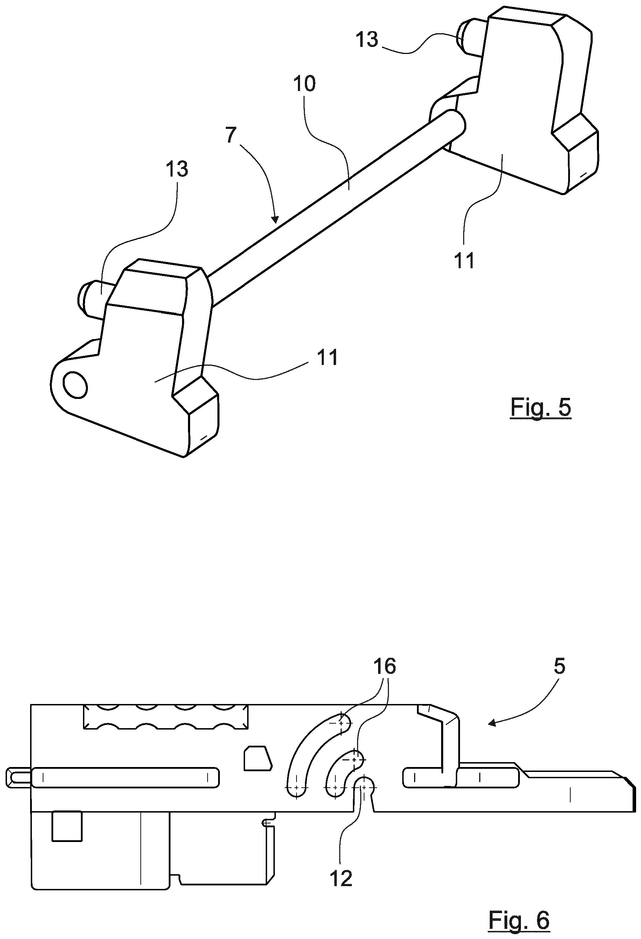

Wie sich aus Figur 5 ergibt, weist die Verriegelungseinrichtung 7 eine Achse 10 und zwei an beiden Enden der Achse 10 angebrachte Verriegelungselemente 11 auf. Beispielsweise kann die Achse 10 aus einem Metallwerkstoff, wie z.B. Stahl, ausgebildet sein, wohingegen die beiden an der Achse 10 angebrachten Verriegelungselemente 11 aus einem geeigneten Kunststoffmaterial ausgeführt sein können. Die Verbindung zwischen den Verriegelungselementen 11 und der Achse 10 kann zum Beispiel dadurch erfolgen, dass die Verriegelungselemente 11 an die Achse 10 angespritzt werden. Selbstverständlich ist jedoch auch ein Verkleben der Verriegelungselemente 11 mit der Achse 10 möglich.

Insbesondere aus der Seitenansicht von Figur 6 ergibt sich, dass die Kontaktplatte 5 eine längliche, über die gesamte Breite der Kontaktplatte 5 verlaufende Ausnehmung 12 aufweist, in der die Achse 10 der Verriegelungseinrichtung 7 drehbar gelagert ist. Die Ausnehmung 12 ist mit einem Hinterschnitt ausgeführt, sodass es zwar erforderlich ist, die Achse 10 mit einer gewissen Kraft in dieselbe zu drücken, die Achse 10 dadurch jedoch einen guten Halt in der Ausnehmung 12 hat.

Die Art und Weise der Anordnung der Achse 10 in der Ausnehmung 12 der Kontaktplatte 5 ist außerdem in Figur 3 erkennbar. Aus Figur 3 ergibt sich des Weiteren, dass die Achse 10 der Verriegelungseinrichtung 7 deren Drehachse in der Kontaktplatte 5 darstellt.

Um eine sichere Verbindung zwischen den Verriegelungselementen 11 und damit der Verriegelungseinrichtung 7 einerseits und den Federelementen 9 andererseits zu gewährleisten, weisen die beiden Verriegelungselemente 11 jeweils einen Stift 13 auf, der in das jeweilige Federelement 9 eingreift. Die beiden Stifte 13 sind in Figur 5 erkennbar und es ist insbesondere aus Figur 4 sehr einfach herzuleiten, wie die Stifte 13 in die Federelemente 9 eingreifen. Auf diese Weise sind die Federelemente 9 sicher durch die Stifte 13 gehalten Dadurch können die Federelemente 9 eine Kraft auf die Verriegelungselemente 11 ausüben ohne abzurutschen.

Zur Montage des Akkupacks 3 an dem Gehäuse 2 des Elektrohandwerkzeugs 1 wird der Akkupack 3 lediglich in das Gehäuse 2 eingeschoben, wozu der Akkupack 3 und/oder das Gehäuse 2 entsprechende, nicht näher bezeichnete Führungselemente aufweisen können. Dabei gleiten, wie in Figur 1 erkennbar, die Verriegelungselemente 11 auf einem beiderseits des Akkupacks 3 vorgesehenen Absatz 14, der ein solches Führungselement bilden kann und in dem sich die Ausnehmung 8 befindet. Wenn die Verriegelungselemente 11 die Ausnehmung 8 in dem Absatz 14 erreichen, werden sie durch die Kraft der in Verriegelungsrichtung wirkenden Federelemente 9 in die Ausnehmung 8 gedrückt, wie in Figur 2 erkennbar. Auf diese Weise wird der Akkupack 3 gegenüber dem Gehäuse 2 verriegelt.

Zur Entriegelung des Akkupacks 3 ist ein auf die Verriegelungseinrichtung 7 wirkendes, in dem Gehäuse 2 verschieblich gelagertes Entriegelungselement 15 vorgesehen das, wenn es gedrückt wird, die Verriegelungselemente 11 gegen die Kraft der Federelemente 9 aus der Ausnehmung 8 drückt. Daraufhin kann der Akkupack 3 aus dem Gehäuse 2 entnommen werden. Zur Entriegelung ist eine Drehung der Verriegelungselemente 11 von lediglich von ca. 20°C um die Achse 10 erforderlich. Selbstverständlich kann diese Winkelangabe bei anderen geometrischen Verhältnissen zwischen dem Gehäuse 2 und dem Akkupack 3 auch entsprechend geändert werden.

In Figur 6 sind außerdem zwei Abstandshalter 16 erkennbar, an denen sich die Verriegelungselemente 11 abstützen und die dafür sorgen, dass zwischen der Kontaktplatte 5 und den Verriegelungselementen 11 ein gewisser Abstand entsteht. Durch diesen Abstand bzw. diesen Spalt kann Staub und ähnliches, der beim Arbeiten mit dem Elektrohandwerkzeug 1 entsteht, nach unten fallen, so dass ein Blockieren der Verriegelungseinrichtung 7 durch Staub oder ähnliches verhindert wird.

## Patentansprüche

1. Vorrichtung (4) zur Verriegelung eines Akkupacks (3) an einem Gehäuse (2) eines Elektrohandwerkzeugs (1), mit einer mit dem Gehäuse (2) verbindbaren, wenigstens einen Kontakt (6) aufweisenden Kontaktplatte (5) zur Herstellung eines elektrischen Kontakts zwischen dem Akkupack (3) und dem Elektrohandwerkzeug (1) und mit einer Verriegelungseinrichtung (7), die in wenigstens eine Ausnehmung (8) in dem Akkupack (3) eingreift,
**dadurch gekennzeichnet, dass** die Verriegelungseinrichtung (7) drehbar an der Kontaktplatte (5) gelagert ist, und dass sich die Verriegelungseinrichtung (7) über wenigstens ein Federelement (9) an der Kontaktplatte (5) abstützt.

2. Vorrichtung nach Anspruch 1,
**dadurch gekennzeichnet, dass** die Verriegelungseinrichtung (7) eine Achse (10) und zwei an beiden Enden der Achse (10) angebrachte Verriegelungselemente (11) aufweist.

3. Vorrichtung nach Anspruch 2,
**dadurch gekennzeichnet, dass** die Kontaktplatte (5) eine längliche Ausnehmung (12) aufweist, in der die Achse (10) der Verriegelungseinrichtung (7) drehbar gelagert ist.

4. Vorrichtung nach Anspruch 2 oder 3,
**dadurch gekennzeichnet, dass** sich die beiden Verriegelungselemente (11) über jeweilige Federelemente (9) an der Kontaktplatte (5) abstützen.

5. Vorrichtung nach Anspruch 4,
**dadurch gekennzeichnet, dass** die beiden Verriegelungselemente (11) jeweils einen Stift (13) aufweisen, der in das jeweilige Federelement (9) eingreift.

6. Vorrichtung nach einem der Ansprüche 2 bis 5,
**dadurch gekennzeichnet, dass** die Achse (10) aus einem Metallwerkstoff und die beiden Verriegelungselemente (11) aus einem Kunststoffmaterial ausgebildet sind.

7. Vorrichtung nach einem der Ansprüche 1 bis 6,
**dadurch gekennzeichnet, dass** an der Kontaktplatte (5) wenigstens ein Abstandshalter (16) zur Erzeugung eines Abstands wenigstens eines der Verriegelungselemente (11) von der Kontaktplatte (5) angeordnet ist.

8. Vorrichtung nach einem der Ansprüche 1 bis 7,
**dadurch gekennzeichnet, dass** der Akkupack (3) und/oder das Gehäuse (2) Führungselemente zur Führung des Akkupacks (3) in dem Gehäuse (2) aufweist.

9. Vorrichtung nach einem der Ansprüche 1 bis 8,
**dadurch gekennzeichnet, dass** in dem Gehäuse (2) ein auf die Verriegelungseinrichtung (7) wirkendes Entriegelungselement (15) verschieblich gelagert ist.

10. Elektrohandwerkzeug (1) mit einem Gehäuse (2), mit einem an dem Gehäuse (2) anbringbaren Akkupack (3) und mit einer Vorrichtung (4) zur Verriegelung des Akkupacks (3) an dem Gehäuse (2) nach einem der Ansprüche 1 bis 9.

## Claims

1. Device (4) for locking a rechargeable battery pack (3) on a housing (2) of a hand-held power tool (1), having a contact plate (5), which is connectable to the housing (2) and comprises at least one contact (6), for producing an electrical contact between the rechargeable battery pack (3) and the hand-held power tool (1) and having a locking device (7),which engages in at least one recess (8) in the rechargeable battery pack (3),
**characterized in that** the locking device (7) is mounted on the contact plate (5) so as to be rotatable, and **in that** the locking device (7) is supported on the contact plate (5) by means of at least one spring element (9).

2. Device according to Claim 1,
**characterized in that** the locking device (7) comprises a spindle (10) and two locking elements (11) which are attached on both ends of the spindle (10).

3. Device according to Claim 2,
**characterized in that** the contact plate (5) comprises an elongated recess (12) in which the spindle (10) of the locking device (7) is rotatably mounted.

4. Device according to Claim 2 or 3,
**characterized in that** the two locking elements (11) are supported on the contact plate (5) by means of respective spring elements (9).

5. Device according to Claim 4,
**characterized in that** the two locking elements (11) each comprise a pin (13) which engages in the respective spring element (9).

6. Device according to one of claims 2 to 5,
**characterized in that** the spindle (10) is realized from a metal material and the two locking elements (11) are realized from a plastic material.

7. Device according to one of claims 1 to 6,
**characterized in that** at least one spacer (16) is arranged on the contact plate (5) to generate a distance between at least one of the locking elements (11) and the contact plate (5).

8. Device according to one of claims 1 to 7,
**characterized in that** the rechargeable battery pack (3) and/or the housing (2) comprises guide elements for guiding the rechargeable battery pack (3) in the housing (2).

9. Device according to one of claims 1 to 8,
**characterized in that** an unlocking element (15), which acts on the locking device (7), is movably mounted in the housing (2).

10. Hand-held power tool (1) having a housing (2), having a rechargeable battery pack (3) which is attachable to the housing (2) and having a device (4) for locking the rechargeable battery pack (3) on the housing (2) according to one of claims 1 to 9.

## Revendications

1. Dispositif (4) de verrouillage d'un bloc-batterie (3) sur un boîtier (2) d'un outil à main électrique (1), doté d'une plaque de contact (5) pouvant être reliée au boîtier (2) et présentant au moins un contact (6) pour établir un contact électrique entre le bloc-batterie (3) et l'outil électrique à main (1) et doté d'un dispositif de verrouillage (7) qui s'engage à l'intérieur d'au moins un évidement (8) dans le bloc-batterie (3), **caractérisé en ce que** le dispositif de verrouillage (7) est monté de manière à pouvoir tourner sur la plaque de contact (5) et **en ce que** le dispositif de verrouillage (7) s'appuie sur la plaque de contact (5) par l'intermédiaire d'au moins un élément formant ressort (9).

2. Dispositif selon la revendication 1, **caractérisé en ce que** le dispositif de verrouillage (7) présente un axe (10) et deux éléments de verrouillage (11) montés au niveau des deux extrémités de l'axe (10).

3. Dispositif selon la revendication 2, **caractérisé en ce que** la plaque de contact (5) comporte un évidement allongé (12) à l'intérieur duquel l'axe (10) du dispositif de verrouillage (7) est monté de manière à pouvoir tourner.

4. Dispositif selon la revendication 2 ou 3, **caractérisé en ce que** les deux éléments de verrouillage (11) s'appuient sur la plaque de contact (5) par l'intermédiaire d'éléments formant ressort (9) respectifs.

5. Dispositif selon la revendication 4, **caractérisé en ce que** les deux éléments de verrouillage (11) présentent respectivement une broche (13) qui s'engage dans l'élément formant ressort (9) respectif.

6. Dispositif selon l'une quelconque des revendications 2 à 5, **caractérisé en ce que** l'axe (10) est formé à partir d'un matériau métallique et les deux éléments de verrouillage (11) sont formés à partir d'une matière plastique.

7. Dispositif selon l'une quelconque des revendications 1 à 6, **caractérisé en ce qu'**au moins une pièce d'écartement (16) est disposée sur la plaque de contact (5) dans le but de créer une distance entre au moins un des éléments de verrouillage (11) et la plaque de contact (5).

8. Dispositif selon l'une quelconque des revendications 1 à 7, **caractérisé en ce que** le bloc-batterie (3) et/ou le boîtier (2) présente(nt) des éléments de guidage qui sont destinés à guider le bloc-batterie (3) à l'intérieur du boîtier (2).

9. Dispositif selon l'une quelconque des revendications 1 à 8, **caractérisé en ce qu'**un élément de déverrouillage (15) qui agit sur le dispositif de verrouillage (7) est monté de manière à pouvoir être déplacé à l'intérieur du boîtier (2).

10. Outil à main électrique (1) doté d'un boîtier (2), d'un bloc-batterie (3) pouvant être monté sur le boîtier (2) et d'un dispositif (4) de verrouillage du bloc-batterie (3) sur le boîtier (2) selon l'une quelconque des revendications 1 à 9.
